**Europäisches Patentamt**

**European Patent Office**

**Office européen des brevets**

(19)

(11) Veröffentlichungsnummer: **0 086 452**
**B1**

(12) **EUROPÄISCHE PATENTSCHRIFT**

(45) Veröffentlichungstag der Patentschrift:
03.09.86

(21) Anmeldenummer: **83101227.3**

(22) Anmeldetag: **09.02.83**

(51) Int. Cl.⁴: **E 04 B 1/48,** F 16 B 13/02,
B 23 B 51/08

(54) Verfahren zum Befestigen einer zu verputzenden Isolierstoffplatte an einer Bauwerksoberfläche.

(30) Priorität: 12.02.82 CH 900/82
12.02.82 CH 901/82

(43) Veröffentlichungstag der Anmeldung:
24.08.83 Patentblatt 83/34

(45) Bekanntmachung des Hinweises auf die Patenterteilung:
03.09.86 Patentblatt 86/36

(84) Benannte Vertragsstaaten:
AT CH DE FR GB IT LI NL

(56) Entgegenhaltungen:
WO-A-82/01024
DE-A-2 234 037
DE-A-2 261 846
DE-U-7 125 107
DE-U-8 016 539
US-A-2 344 143
US-A-2 477 891

(73) Patentinhaber: Fäster GmbH & Co. KG
Befestigungstechnik, Am Breitenbach 14, D-8901
Stettenhofen (DE)

(72) Erfinder: Bappert, Adolf, Hasenweg 365, CH- 4616
Kappel (CH)
Erfinder: Bader, Hans- Peter, Sägetalstrasse 2,
D-7823 Bonndorf- Gündelwangen (DE)

(74) Vertreter: Quehl, Horst Max, Dipl.- Ing.,
Glattalstrasse 37 Postfach A-165, CH- 8052 Zürich
(CH)

EP 0 086 452 B1

## Beschreibung

Die Erfindung betrifft ein Verfahren zur Befestigung einer zu verputzenden Isolierstoffplatte an einer Bauwerksoberfläche, wobei nach der Anordnung der Isolierstoffplatte an der Bauwerksoberfläche durch sie hindurch mindestens ein Aufnahmeloch für einen Dübel bis in die Bauwerksoberfläche hineingebohrt wird und ein mit einem tellerartigen Kopf versehener Dübel anschliessend in das Bohrloch eingesetzt wird, so dass sein Kopf die Isolierplatte anpresst.

Der zur Ausführung dieses Verfahrens üblicherweise verwendete Dübel besteht aus Kunststoff und hat einen pilzartig geformten nagelähnlichen Dübelteil und einen auf sein spitzes Ende aufgesteckten Spreizdübel, und er wird durch leichte Hammerschläge in das vorbereitete Loch eingetrieben, bis sein tellerartig geformter Kopf sich fest an die Oberfläche der Isolierplatte andrückt. Ein geeigneter Dübel ist beispielweise durch das DE-GM 7 932 608 bekannt. Die Befestigung der Isolierstoffplatte an der Bauwerksoberfläche kann zusätzlich durch eine Klebeschicht erfolgen. Eine Klebeschicht ist jedoch nicht ausreichend, um zu verhindern, dass sich die Isolierstoffplatte nach einiger Zeit wieder ablöst.

Durch die DE-A-2 234 037 ist weiterhin ein Dübel für die Befestigung von Isolierstoffplatten bekannt, der zum zusätzlichen Befestigen einer äusseren, wasserdichte Kunststofolie an seinem tellerförmigen Kopf einen Kunststoffüberzug aufweist, um die Kunststofolie an ihm anzuschweissen.

Um die an einem Bauwerk angebrachten Isolierstoffplatten vor Witterungseinflüssen zu schützen und auch aus ästhetischen Gründen wird abschliessend die äussere Oberfläche mit einer dünnen Schicht einer Mörtelmasse verputzt. Diese Mörtelmasse überdeckt somit die Fugen zwischen den Isolierstoffplatten und ausserdem die Köpfe der Befestigungsdübel. Die Schichtdicke der Mörtelmasse beträgt etwa 2 bis 3 mm und darf ein bestimmtes Mass nicht überschreiten, da sonst Dampfsperren entstehen. Es hat sich jedoch als nachteilig erwiesen, dass sich die Stellen, an denen ein Dübel gesetzt wurde, nach einiger Zeit an der Oberfläche in Form von Rissen und Farbveränderungen abzeichnen. Die Ursache hierfür liegt in den unterschiedlichen Materialeigenschaften des Dübelmaterials und der Mörtelmasse, hinsichtlich Wärmeleitfähigkeit und thermischem Ausdehnungskoeffizienten. Dieser Nachteil kann durch dickeres Auftragen der Mörtelmasse nicht verhindert werden, da diese, wie erwähnt, eine bestimmte Dicke nicht überschreiten darf.

Der vorliegenden Erfindung liegt die Aufgabe zugrunde, den erwähnten Nachteil durch ein Verfahren der eingangs genannten Art zu verhindern, das sich einfach, zeitsparend und somit kostensparend ausführen lässt. Die Lösung dieser Aufgabe erfolgt dadurch, dass beim Bohren des Aufnahmeloches im gleichen Arbeitsgang ein dem Durchmesser des Dübelkopfes entsprechendes Senkloch in die Isolierstoffplatte mit einer Tiefe eingefräst wird, die der Dicke des Dübelkopfes in seiner Längsrichtung einschliesslich der Dicke einer Isolierstoff-Rondelle entspricht und dass das Senkloch durch die Rondelle ausgefüllt wird.

Aufgrund des erfindungsgemässen Verfahrens ergibt sich ein um die Dicke der Isolierstoffrondelle vergrösserter Abstand des Verputzes, d.h. der Mörtelschicht zu dem tellerartigen Kopfteil des Dübels, so dass eine nachteilige Beeinflussung der Mörtelschicht verhindert wird. Die Isolierstoffrondelle besteht vorzugsweise aus dem gleichen Material wie die Isolierstoffplatte. Weiterhin ist es vorteilhaft, dass die Wandoberfläche vor dem Auftragen der Mörtelschicht durch Abschleifen der Oberfläche der befestigten Isolierstoffplatte ohne Behinderung durch Dübelköpfe egalisiert werden kann, so dass die Egalisierung der Wandoberfläche nicht durch die Mörtelschicht erfolgen muss und materialsparend eine dünnere Mörtelschicht angewendet werden kann.

Um zu vermeiden, dass das Ausfüllen des Senkloches durch die Isolierstoffrondelle an der Baustelle mit einem zusätzlichen Arbeitsgang verbunden ist, werden bei der Ausführung des Verfahrens vorteilhaft Dübel verwendet, wie in dem Anspruch 4 und den folgenden Unteransprüchen 5 bis 12 beansprucht ist und an deren aus dem Dübelmaterial bestehenden tellerartigen Kopf die Isolierstoffrondelle bereits werkseitig versehen wurden. Die Verbindung zwischen dem tellerartigen Dübelkopf und der Isolierstoffrondelle kann auf verschiedene Weise, wie z.B. durch Kleben oder Eindrücken von angeformten Erhebungen am einen Teil in entsprechend geformte Aussparungen am andern Teil erfolgen.

Ein Montagewerkzeug für die Montage eines Dübels nach Anspruch 12 ist in dem Anspruch 13 aufgeführt.

Das Herstellen des Senkloches in einem Arbeitsgang mit dem Bohren des Dübelloches bis in die Bauwerksoberfläche hinein erfolgt auf einfache und zeitsparende Weise mittels eines Bohren, wie er in dem Anspruch 14 definiert ist. Der drehbare Anschlag ermöglicht das Bohren ohne besonderen Aufwand für die Kontrolle der Bohrtiefe, da durch diesen Anschlag eine Beschädigung der Oberfläche der Isolierstoffplatte verhindert wird. Der Anschlag kann beim Bohren festgehalten sein oder er kommt sofort bei Kontakt mit der leicht beschädigbaren Oberfläche der Isolierstoffplatte zum Stillstand. Ein Bohrer mit einem Anschlag, mit dem dies nicht erreicht wird, da der Anschlag nicht drehbar gelagert ist, wird in der US-A-2 344 143 gezeigt.

Im folgenden wird die Erfindung anhand der Zeichnungen näher erläutert. Es zeigt:

Fig. 1 einen Querschnitt durch die an einer Wand befestigte Isolierstoffplatte durch die Achse des Dübels,

Fig. 2 einen Axialschnitt des Werkzeugs zur Herstellung der Dübelaufnahmebohrung,

Fig. 3 eine Ansicht der Unterseite einer Isolierstoffrondelle,

Fig. 4 eine hälftig geschnittene Seitenansicht der Isolierstoffrondelle nach Fig. 3,

Fig. 5 einen im Winkel verlaufenden Axialschnitt durch den Dübelkopfbereich einer weiteren Ausführungsform eines Isolierplattendübels,

Fig. 6 eine hälftig geschnittene Seitenansicht einer zu dem Dübelkopf nach Fig. 5 passenden Isolierstoffrondelle,

Fig. 7 eine Aufsicht auf den Dübelkopf nach Fig. 5,

Fig. 8 einen Teilquerschnitt durch eine isolierte Wand im Bereich eines Dübels geteilter Ausführungsform für die Anpassung an verschieden dicke Idolierplatten, wobei der Dübel hälftig geschnitten ist und je eine Hälfte eine andere Anpassungsposition zeigt, mit schemenhafter Teildarstellung eines Werkzeugs zum Verstellen der Dübellänge,

Fig. 9 eine Querschnittsdarstellung eines Werkzeugs zum Verstellen der Länge des in Fi. 8 gezeigten Dübels,

Fig. 10 eine vergrösserte Seitenansicht im Bereich der Spitze des Dübels nach Fig. 8,

Fig. 11 einen Querschnitt durch den Dübel entlang der Linie XI-XI der Fig. 10 und

Fig. 12 eine Seitenansicht zu dem in Fig. 10 dargestellten Teil des Dübels.

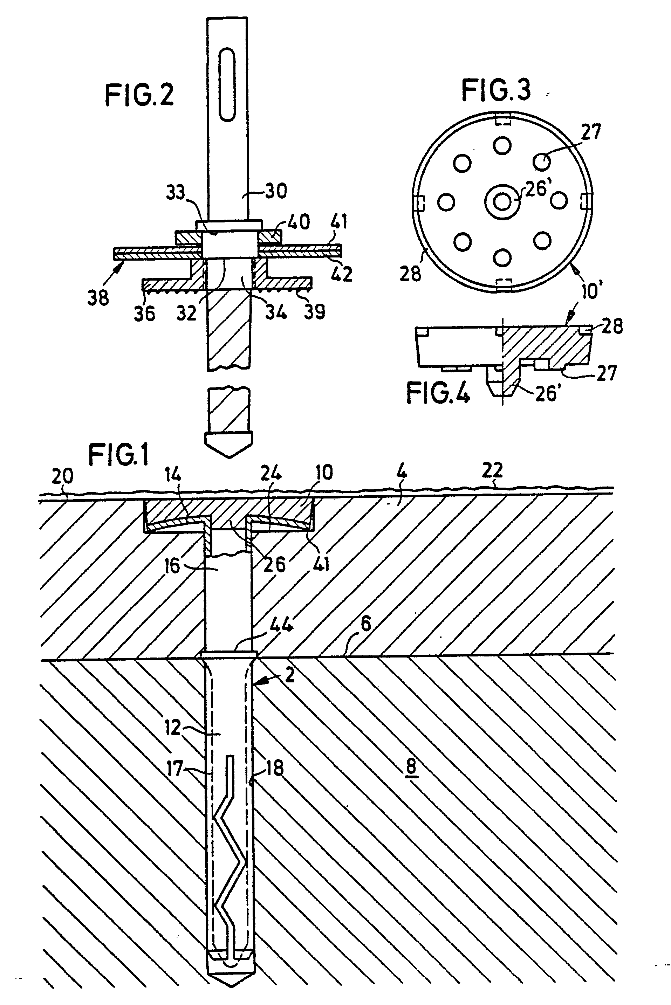

Die Darstellung nach Fig. 1 zeigt den Dübel 2 in montiertem Zustand, in dem er eine z.B. aus "Styropor", Mineralfasern o.dgl. gebildete Isolierplatte 4 an der Oberfläche 6 eines zu isolierenden Bauwerks 8 festhält. Die Befestigung zwischen der Isolierstoffplatte 4 und der Bauwerksoberfläche 6 kann zusätzlich durch eine Klebeschicht erfolgen, so dass der Dübel 2 nur als zusätzliche Sicherung gegen Ablösung von der Klebeschicht dient.

Im dargestellten Beispiel besteht der Dübel 2, abgesehen von der erfindungswesentlichen Isolierstoffrondelle 10, aus zwei Teilen, d.h. einem Spreizdübel 12 und einem mit einem tellerartigen Kopf 14 versehenen nagelartigen Dübelbolzen 16, der in den Spreizdübel 12 mit seinem durch Strichlinien angedeuteten Bolzenteil 17 eingetrieben ist. An dem Bolzenteil 17 sind vorzugsweise nicht dargestellte Umfangsrillen vorgesehen, die die Verankerung in dem Spreizdübel 12 verbessern. Der Dübel 2 kann jedoch auch einstückig ausgeführt sein, so dass sein Schaft sich beim Eintreiben in der Wandung des in dem Bauwerk 8 vorgesehenen Dübelaufnahmeloches 18 verankert.

Bei bekannten Dübeln für den gleichen Anwendungszweck lag der teller- oder pilzartige Dübelkopf 14 auf der Aussenfläche 20 der Isolierstoffplatte 4 auf, oder er war aufgrund der elastischen Verformbarkeit des Materials der Isolierstoffplatte etwas in deren Oberfläche eingedrückt. Um auch an der Stelle der äusseren Dübelkopfoberfläche eine Haftung der aufzubringenden Mörtelschicht 22 zu erhalten, wurde der Dübelkopf mit Unterbrechungen bzw. Löchern versehen. Dies konnte jedoch nicht verhindern, dass sich im Bereich des Dübelkopfes die Mörtelschicht, nach anfänglicher Bildung von Rissén, ablöste. Die erfindungsgemäss an dem Dübelkopf 14 vorgesehene Isolierstoffrondelle 10 verhindert diesen Einfluss aufgrund der unterschiedlichen Materialeigenschaften zwischen dem Dübelmaterial und dem Mörtelmaterial an dieser begrenzten Befestigungsstelle der Isolierstoffplatte. Die Dicke der Isolierstoffrondelle ermöglicht auch das Egalisieren der Oberfläche 20 der Isolierstoffplatte durch Abschleifen, bevor die Mörtelschicht 22 aufgebracht wird und stellt hierfür ausreichend Material zur Verfügung. Die vertiefte Anordnung des Dübelkopfes 14 setzt selbstverständlich die vorherige Ausbildung eines Senkloches 24 in entsprechender Tiefe voraus.

Die Isolierstoffrondelle 10 ist vorzugsweise bereits werkseitig mit dem Dübel komplettiert worden. Die Herstellung der Verbindung zwischen der Isolierstoffrondelle 10 und dem tellerartigen Dübelkopf 14 kann durch druckknopfartiges Eindrücken eines oder mehrerer Fortsätze 26 in eine entsprechend geformte Ausnehmung des Dübelkopfes mit oder ohne Verwendung eines Klebemittels erfolgen. Die Isolierstoffrondelle 10 kann auch in einer Form an den Dübelkopf bei ihrer Herstellung angeformt werden, so dass das noch fliessfähige Material der Isolierstoffrondelle vor Aushärtung in Vertiefungen des Dübelkopfes eindringt und sich dort verankert.

Die Isolierstoffrondelle kann vorteilhaft auch kappenförmig ausgeführt sein, mit einem zum Uebergreifen des tellerartigen Dübelkopfes bestimmten, im Querschnitt U-förmigen Rand.

Die Figuren 3, 4 und 6, 7 zeigen Beispiele für Isolierstoffrondellen 10', 10'', die an ihrer Unterseite mehrere kurze Zapfen 27, 27', 26' aufweisen. Der tellerartige Dübelkopf 14'' hat in entsprechender Form, Anordnung und Grösse Löcher 29, in die sich die Zapfen 26', 27, 27' einpressen lassen, so dass sie unter Vorspannung festsitzen. An der oberen Umfangskante der Isolierstoffrondelle 10', 10'' sind mehrere kleinere Aussparungen 28, 28', in die Verputzmörtel 20 eindringen kann, so dass der Verbund an der Uebergangsstelle zwischen dem Rand des Senkloches 24, 24' und der Isolierstoffrondelle zu der Mörtelschicht noch verbessert wird. Die Herstellung der Isolierstoffrondelle nach den Figuren 3, 4 und 5, 6 kann separat in einer Form allein oder in einer Form erfolgen, in die der Dübel 2 eingelegt wird, so dass sich ein Anformen in der Form ergibt.

Die Figur 2 zeigt ein Werkzeug zur Herstellung der Dübelaufnahmebohrung 18, 18' sowie des Senkloches 24, 24' in einem Arbeitsgang. Das Werkzeug hat einen durchgehenden Schaft 30,

0 086 452

dessen oberes Ende in üblicher Weise im Futter einer Bohrmaschine gehalten ist. Der Schaft 30 ist ähnlich geformt wie bei bekannten Steinbohrern, jedoch hat er zueinander abgestufte Anschlagschultern 32, 33 und einen Gewindeteil 34. Die erste Anschlagschulter 32 dient der Festlegung der Position des Fräskopfes 36 für die Herstellung des Senkloches 24, indem der Fräskopf bis zu dieser Anschlagschulter 32 auf den Gewindeteil 34 aufgeschraubt ist. Für die Aenderung der Position des Fräskopfes 36 relativ zu dem Schaft 30 des Bohrwerkzeuges können zwischen diese Anschlagschulter 32 und den Fräskopf 36 entsprechend dicke, nicht dargestellte Zwischenlegscheiben angeordnet werden. Für einen grösseren Verstellbereich kann die axiale Länge des Gewindeteiles 34 grösser ausgeführt werden.

Die zweite Anschlagschulter 33 dient der Positionierung eines drehbar um den Schaft 30 angeordneten scheibenförmigen Anschlages 38 relativ zum Schaft 30, der die Bohrtiefe begrenzt. Der Abstand zwischen der Arbeitsfläche 39 des Fräskopfes 36 und diesem Anschlag 38 bestimmt die Tiefe des Senkloches 24. Für eine Aenderung der Bohrtiefe können zwischen die Anschlagschulter 33 und den drehbar gelagerten Anschlag 38 entsprechend dicke Zwischenlegscheiben 40 vorgesehen werden.

Der drehbare Anschlag 38 besteht beispielsweise aus zwei kreisringförmigen Scheiben 41, 42, die durch geeignete Materialwahl einen geringen Reibungswiderstand gegeneinander aufweisen. Aufgrund von Reibungskräften dreht sich der Anschlag 38 anfänglich mit, kommt jedoch bei Kontakt mit der Oberfläche 20 der Isolierstoffplatte 4 sofort zum Stillstand, so dass diese nicht beschädigt wird. Daraus ergibt sich eine einfache Betätigung des Bohrwerkzeuges, da es ohne Kontrolle vorgetrieben werden kann, bis der Anschlag 38 ein weiteres Bohren verhindert.

Nach Zurückziehen des Bohrwerkzeuges kann in die somit hergestellte abgestufte Bohrung 18, 24 der Isolierplatten auf einfache Weise in dieses Loch entweder durch Eindrücken mit entsprechendem Kraftaufwand oder unter Verwendung eines Hammers mit einer mindestens der Grösse der Isolierstoffrondelle entsprechenden Schlagfläche eingesetzt werden. Der Bund 44 des Spreizdübels, dessen Durchmesser etwas grösser ist als der Durchmesser des Bohrloches 18, stört dabei nicht, da das Material der Isolierstoffplatte eine verhältnismässig grosse Elastizität aufweist. An der Oberfläche 6 des Bauwerkes 8 findet jedoch der Bund 44 einen Anschlag, so dass beim Eintreiben des Isolierplattendübels die Bewegung des Spreizdübels 12 zum Stillstand kommt, während der Dübelbolzen 16 in den Spreizdübel weiter hineingleitet, bis der Dübelkopf am Boden des Senkloches 24 zur Anlage gelangt. Im dargestellten Beispiel erfolgt die Anlage entlang des Kopfrandes 41, da der tellerartige Dübelkopf 14 leicht gewölbt geformt ist.

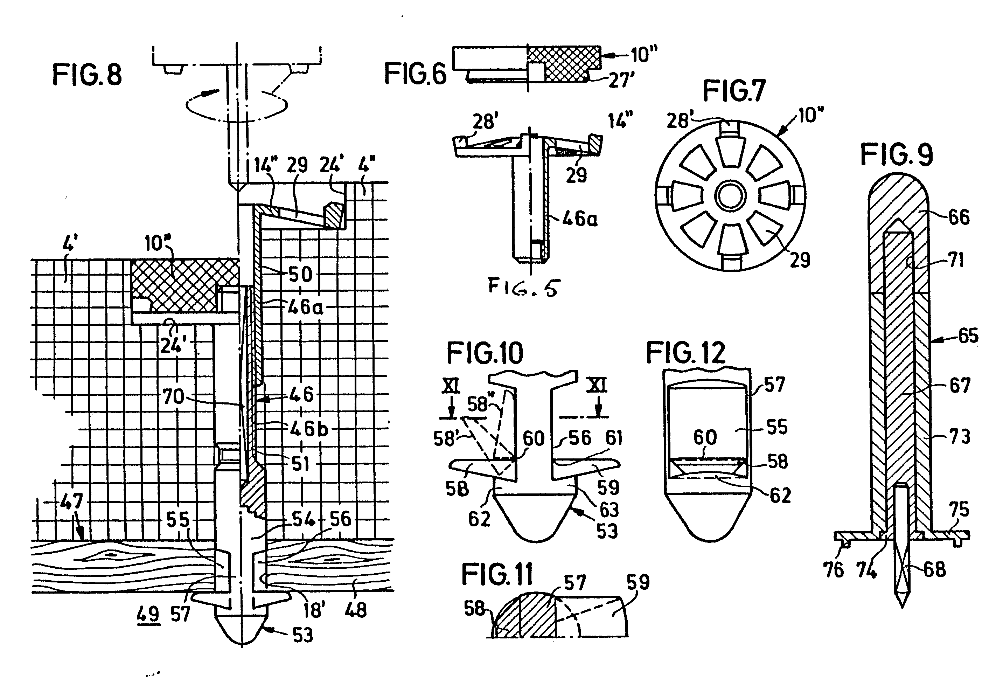

Der in Figur 8 in zwei verschiedenen Einbaupositionen gezeigte Isolierplattendübel 46 ist für die Befestigung von Isolierstoffplatten 4', 4'' an Wänden 47 ausgeführt, die hinter einer Begrenzungsplatte 48 der Wand einen Hohlraum 49 aufweisen, so dass für eine ausreichende Befestigung der Isolierplattendübel 46 die Begrenzungsplatte 48 hintergreifen muss. Da in diesem Fall der Isolierplattendübel 46 in Anpassung an verschiedene Dicken von Isolierplatten 4', 4'' nicht entsprechend tief in ein Aufnahmeloch 18 eines Bauwerkes 8 wie im Beispiel nach Figur 1 eingeführt werden kann, ist der Dübel 46 dieses Ausführungsbeispieles nach Figur 8 auf besondere Weise längenveränderlich, indem ein den tellerförmigen Dübelkopf 14'' aufweisender Dübelteil 46a mit einem hohlen Schaft 50 auf den übrigen, der Verankerung an der Wand 47 dienenden Dübelteil 46b bzw. dessen hohlen Schaft 51 aufschraubbar ist.

Das der Dübelspitze 53 zugekehrte Dübelende 54 ist im Anschluss an den Hohlschaft 51 massiv ausgebildet und hat einen durch zwei einander diametral gegenüberliegende Aussparungen 55, 56 gebildeten zentralen und im Querschnitt rechteckförmigen Stegteil 57, an den scharnierartig beidseitig ein Widerhakenteil 58 bzw. 59 angeformt ist, wie besonders die Figur 10 zeigt. Die durch die elastische Verformbarkeit des Dübel-Kunststoffmaterials gegebene Scharnierverbindung 60, 61 zwischen dem Stegteil 57 und dem schwenkbaren Widerhakenteil 58 bzw. 59 hat einen Abstand zu dem Ende der Aussparung 55 bzw. 56 entsprechend der Basisbreite des Widerhakenteiles, so dass die Widerhakenteile 58, 59 an den Schultern 62, 63 am Ende der Aussparungen einen Anschlag in vollständig aufgespreizter Position finden. Diese Position entspricht derjenigen im fertig montierten Zustand des Dübels entsprechend der Darstellung in Figur 8 und ist in Figur 10 durch eine ausgezogene Linie dargestellt. Zwei andere Positionen der Widerhakenteile sind in Figur 10 durch Strichlinien 58', 58'' dargestellt. Position 58' entspricht der Ausgangsposition des Widerhakenteiles 58 bzw. der Position nach Herstellung des Dübels durch die übliche Spritztechnik. Nach Einschieben der aus den Teilen 46a und 46b bestehenden Dübeleinheit, d.h. des Isolierplattendübels 46 in das vorbereitete Aufnahmeloch klappen die Widerhakenteile 58, 59 aufgrund des Kontaktes mit der Bohrlochwand nach innen in die Position 58'', um sich nach Passieren der Aufnahmebohrung 18' in dem Hohlraum 49 hinter der Begrenzungsplatte 48 aufgrund der Materialelastizität in der Scharnierverbindung wieder in die Position 58' aufzuspreizen. Danach wird der Dübelteil 46a relativ zum Dübelteil 46b verdreht, so dass sich durch den Gewindeeingriff zwischen beiden der Abstand zwischen der Dübelspitze 53 und dem Dübelkopf 14'' verringert und entsprechend die Widerhakenteile sich in die in Figur 8 dargestellte Position bis zum Anschlag an den Schultern 62, 63 umlegen.

Die Widerhakenteile 58, 59 haben eine Breite, die angenähert dem Durchmesser des Dübels entspricht, wie die Darstellung der Figur 11 am besten zeigt. Ihre Dicke entspricht angenähert dem Abstand zwischen der Scharnierverbindung 60, 61 und den Schultern 62, 63, der ungefähr der Tiefe der Aussparungen 55, 56 entspricht. Die Darstellung der Figur 8 zeigt, dass an den Widerhakenteilen 58, 59 aufgrund der Zugkraft am Dübel beim Zusammenspannen des Dübels in vorteilhafter Weise keine Biegekräfte, sondern nur Scherkräfte auftreten, so dass der Dübel eine entsprechend hohe Spannkraft aufnehmen kann.

Die Spannkraft des Dübels, mit der er die Isolierstoffplatte 4', 4'' gegen die Begrenzungsplatte 48 eines Bauwerkes drückt, wird durch Verdrehen des Dübelteiles 46a relativ zum Dübelteil 46b mittels eines Werkzeuges erzeugt, das im oberen Teil der Figur 8 durch Strichpunktlinien schemenhaft angedeutet ist. Die Figur 9 zeigt ein Ausführungsbeispiel eines solchen Spannwerkzeuges 65, das von Hand zu betätigen ist. Das Spannwerkzeug 65 hat einen mittels eines Handgriffes 66 festzuhaltenden schaftförmigen Zentralteil 67, an dessen dem Handgriff 66 abgekehrten Ende ein Vierkantbolzen 68 verdrehfest verankert ist, der bei Verwendung des Spannwerkzeuges in den im Querschnitt gleichgeformten Innenraum 70 des Hohlschaftes 51 des Dübelteils 46b eingreift. Der Handgriff 66 hat eine Axialbohrung 71, die ein Ende des schaftförmigen Zentralteiles 67 mit Haftsitz umschliesst. Zwischen dem Handgriff 66 und dem den Vierkantbolzen 68 aufweisenden Ende des Spannwerkzeuges 65 ist eine Drehhülse 73 vorgesehen, die durch einen Bund 74 am Ende des Zentralteiles 67 in axialer Richtung mit geringem Spiel gehalten wird. Die drehbare Lagerung der Drehhülse folgt in Kontakt mit dem im Querschnitt kreisförmigen Zentralteil 67. An ihrem dem Handgriff 66 abgekehrten Ende geht die Drehhülse 73 in einen radial verlaufenden Griffteller 75 über, der mindestens einen Fortsatz 76 aufweist, der für den Eingriff in den Dübelkopf 14'' bestimmt ist.

Nach Aufsetzen des Spannwerkzeuges 65 auf das kopfseitige Dübelende derart, dass der Vierkantbolzen 68 in den Hohlschaft 51 des Dübels eingreift und die Fortsätze 76 des Grifftellers 75 z.B. in die Vertiefung 29 des Dübelkopfes 14'' lässt sich der aufgeschraubte Dübelteil 46a relativ zum Dübelteil 46b durch Drehen der Drehhülse 73 von Hand weiter aufschrauben.

Es versteht sich, dass anstelle des von Hand zu betätigenden einfach aufgebauten Spannwerkzeuges 65 auch ein entsprechend gestaltetes motorisch angetriebenes Spannwerkzeug vorgesehen sein kann.

## Patentansprüche

1. Verfahren zum Befestigen einer zu verputzenden Isolierstoffplatte an einer Bauwerksoberfläche, wobei nach der Anordnung der Isolierstoffplatte (4) an der Bauwerksoberfläche (6) durch sie hindurch mindestens ein Aufnahmeloch für einen Dübel (2) bis in die Bauwerksoberfläche hineingebohrt wird und ein mit einem tellerartigen Kopf (14) versehener Dübel (2) anschliessend in das Bohrloch (18) eingesetzt wird, so dass sein Kopf (14) die Isolierstoffplatte (4) anpresst, dadurch gekennzeichnet, dass beim Bohren des Aufnahmelochs (18) im gleichen Arbeitsgang ein dem Durchmesser des Dübelkopfes (14) entsprechendes Senkloch (24) in die Isolierstoffplatte (4) mit einer Tiefe eingefräst wird, die der Dicke des Dübelkopfes (14) in seiner Längsrichtung einschließlich der Dicke einer Isolierstoffrondelle (10) entspricht und daß das Senkloch durch eine an dem Dübelkopf (14) anliegende Isolierstoffrondelle (10) ausgefüllt wird.

2. Verfahren nach Anspruch 1, dadurch gekennzeichnet, dass nach Einsetzen des Dübels (2) einschliesslich der Isolierstoffrondelle (10) in das Dübelaufnahmeloch (18, 24) die Aussenfläche (20) einschliesslich der Aussenfläche der Isolierstoffrondelle durch Abschleifen egalisiert wird und anschliessend die Oberfläche (20) der Isolierstoffplatte durch eine Verputzschicht (22) überzogen wird.

3. Verfahren nach Anspruch 1, dadurch gekennzeichnet, dass die Isolierstoffrondelle (10) vor Einsetzen des Dübels (2) in das Aufnahmeloch (18, 24) am Dübelkopf (14) befestigt ist.

4. Isolierplattendübel zur Ausführung des Verfahrens nach Anspruch 1, mit einem an seinem einen Ende vorgesehenen, zum Anpressen der Isolierstoffplatte bestimmten, tellerartigen Kopf (14), dadurch gekennzeichnet, dass an der Aussenseite des tellerartigen Kopfes (14) eine Isolierstoffrondelle (10, 10', 10'') befestigt ist, die das in die Isolierstoffplatte (4) eingefräste Senkloch (24) ausfüllt und deren Material gleich oder verwandt ist mit dem schleif- und verputzbaren Material der durch den Dübelkopf anzupressenden Isolierstoffplatte.

5. Dübel nach Anspruch 4, dadurch gekennzeichnet, dass die Verbindung zwischen dem tellerartigen Dübelkopf (14) und der Isolierstoffrondelle durch Erhebungen (26', 27, 27') erfolgt, die in Aussparungen (29) des anderen Teiles eingreifen.

6. Dübel nach Anspruch 4 oder 5, dadurch gekennzeichnet, dass die Isolierstoffrondelle an den Dübelkopf (14) angeformt ist.

7. Dübel nach einem der Ansprüche 4 bis 6, dadurch gekennzeichnet, dass an der dem Dübelkopf (14) abgekehrten Seite der Isolierstoffrondelle Vertiefungen (28) eingeformt sind.

8. Dübel nach einem der Ansprüche 4 bis 7, dadurch gekennzeichnet, dass der tellerartige Kopf (14) sich an einem Dübelbolzen (16) befindet, dessen in dem im Bauwerk befindlichen Aufnahmeloch (18) zu verankernder nagelartiger Bolzenteil (17) von einem Spreizdübel (12) umschlossen ist.

9. Dübel nach einem der Ansprüche 4 bis 7, dadurch gekennzeichnet, dass für die hintergreifende Befestigung des Dübels an einer Wandbegrenzungsplatte (48) der Dübel zwei miteinander konzentrisch verschraubte Dübelteile (46a, 46b) aufweist, von denen einer den tellerartigen Dübelkopf (14'') aufweist und der andere im Bereich der Dübelspitze mit mindestens einem Widerhakenteil (58, 59) versehen ist.

10. Dübel nach Anspruch 9, dadurch gekennzeichnet, dass zwei Widerhakenteile (58, 59) an zwei einandergegenüberliegenden Seiten eines zentralen, in Dübellängsrichtung verlaufenden Stegteiles (57) jeweils angeformt sind, so dass ihre Längsachse mit der Dübellängsrichtung einen spitzen Winkel (58') einschliesst und dass die Widerhakenteile in Aussparungen (55, 56) einschwenkbar sind, die den Dübelstegteil (57) beidseitig begrenzen, wobei die Widerhakenteile (58, 59) in ausgespreizter Position (Figur 10) jeweils an einer Schulter (62, 63) anliegen, die die Aussparungen (55, 56) in Dübellängsrichtung begrenzen.

11. Dübel nach Anspruch 10, dadurch gekennzeichnet, dass die grösste Breite der Widerhakenteile mindestens angenähert gleich dem Durchmesser des Dübels ist.

12. Dübel nach Anspruch 9, dadurch gekennzeichnet, dass der die Dübelspitze (53) aufweisende Dübelteil (46b) einen hohlen Schaftteil (51) hat, in dessen Hohlraum Mittel (70) eingeformt sind für den Eingriff des haltenden Teiles (68) eines Montagewerkzeugs (Figur 9).

13. Montagewerkzeug für die Montage des Dübels nach Anspruch 12 bei der Ausführung des Verfahrens nach Anspruch 1, gekennzeichnet durch einen schaftförmigen, feststehenden zylindrischen Zentralteil (67), dessen eines Ende einen zum verdrehfesten Eingriff in den hohlen Schaft (51) des einen Dübelteils (46b) geformten, vom Werkzeug (65) abstehenden Bolzen (68) trägt und der mit seinem Umfang der Lagerung einer antreibbaren Drehhülse (73) dient, die an ihrem dem Bolzen (68) zugekehrten Ende einen Griffteller (75) mit Mitteln zum Eingriff in den tellerartigen Dübelkopf (14'') des anderen Dübelteiles (48a) aufweist.

14. Senkbohrer zur Ausführung des Verfahrens nach Anspruch 1 mit einem Bohrschaft (30) zum Herstellen des langgestreckten Aufnahmeloches (18) und einem an dem Bohrschaft drehfest angebrachten Senklochfräser (36), gekennzeichnet durch einen um den Bohrschaft (30) drehbar gelagerten Anschlag (38) zur Begrenzung der Bohr- und Frästiefe, der sich direkt oder über eine Zwischenlegscheibe (40) an einer Schulter (33) des Bohrschaftes (30) abstützt.

15. Senkbohrer nach Anspruch 14, dadurch gekennzeichnet, dass der Senklochfräser (36) auf einen Gewindeteil (34) des Bohrschafts (30) aufgeschraubt ist, wobei die axiale Position des drehbar gelagerten Anschlags (38) und/oder des Senklochfräsers (36) durch mindestens eine an der jeweiligen Schulter (33, 32) anliegende Zwischenlegscheibe (40) bestimmt ist.

**Claims**

1. Method of fixing an insulating slab to be plastered to a building surface, whereby after arranging the insulating slab (4) on the building surface (6), at least one location hole for a dowel (2) is drilled through it into the building surface and a dowel (2) provided with a disklike head (14) is subseqently inserted into the drill hole (18), so that its head (14) presses against the insulating slab (4), characterized in that in the same operation with the drilling of the location hole (18), a countersunk hole (24) having the diameter of the dowel head (14) and having a depth which corresponds to the thickness of the dowel head (14) measured in its lengthwise direction, including the thickness of an insulating slab washer (10) is cut into the insulating slab and the countersunk hole is filled by an insulating slab washer (10) engaging on the dowel head (14).

2. Method according to claim 1, characterized in that after inserting dowel (2), including the insulating slab washer (10) in the dowel location hole (18, 24), the outer surface (20), including the outer surface of the insulating slab washer, is levelled by abrasion and subsequently the surface (20) of the insulating slab (4) is covered with a plaster layer (22).

3. Method according to claim 1, characterized in that the insulating slab washer (10) is fixed to the dowel head (14) prior to inserting the dowel (2) in location hole (18,24).

4. Insulating slab dowel for performing the method according to claim 1, with a disk-like head (14) provided at one end thereof, characterized in that an insulating slab washer (10, 10',10'') is fixed to the outside of the disk-like head (14), which fills up the countersunk hole (24) being cut into the insulating slab (4) and its material is the same or similar to that of the insulating slab to be fixed by the dowel.

5. Dowel according to claim 4, characterized in that the connection between the disk-like dowel head (14) and the insulating slab washer takes place by means of projections (26', 27, 27'), which engage in recesses (29) of the other part.

6. Dowel according to claim 4 or 5, characterized in that the insulating slab washer is shaped onto the dowel head (14).

7. Dowel according to one of the claims 4 to 6, characterized in that depressions (28) are shaped into the side of the insulating slab washer remote from the dowel head (14).

8. Dowel according to one of the one of the claims 4 to 7, characterized in that the disk-like head (14) is located on a dowel pin (16), whose nail-like part (17) to be anchored in the location hole (18) in the structure is surrounded by an expansion dowel (12).

9. Dowel according to one of the claims 4 to 7, characterized in that for fixing the dowel to a wall limiting plate (48) so as to engage behind the same, the dowel has two parts (46a, 46b), which are concentrically screwed to one another, whereof one has the disk-like dowel head (14'') and the other is provided with at least one barb part (58, 59) in the vicinity of the dowel tip.

10. Dowel according to claim 9, characterized in that two barb parts (58, 59) are in each case shaped onto facing sides of a central web part (57) extending in the longitudinal direction of the dowel, so that its longitudinal axis forms an acute angle (58') with the dowel direction and that the barb parts (55, 56) can be pivoted into recesses, which define the dowel web part (57) on either side, whilst in the spreadout position (Fig. 10), the barb parts (58, 59) in each case engage with a shoulder (62, 63), bounding recesses (55, 56) in the dowel longitudinal direction.

11. Dowel according to claim 10, characterized in that the greatest width of the barb part is at least approximately the same as the dowel diameter.

12. Dowel according to Claim 9, characterized in that the dowel part (40b) having dowel tip (53) has a hollow shank part (51), in whose cavity are shaped means (70) for the engagement of the holding part (58) of a fitting tool (Fig 9).

13. Fitting tool for fitting the dowel according to claim 12 when performing the method according to claim 1, characterized by a shank-like, fixed cylindrical central part (67), whereof one end carries a bolt (68) projecting from tool (65) and engaging in a manner so that it is restrained from rotation in the hollow shank (51) of dowel part (46b) and whose periphery serves as a mounting support for a drivable rotary sleeve (73), having on its end facing bolt (68) a locking disk (75) with means for engagement in the disk-like dowel head (14'') of dowel part (46a).

14. Countersunk hole drill for performing the method according to claim 1 with a drill shank (30) for producing the elongated location hole (18) and a countersunk hole cutter (36) mounted in non-rotary manner on the shank, characterized by a stop member (38) mounted in rotary manner about the axis of shank (30) which serves to limit the drilling and cutting depth and which is supported in the longitudinal direction of the drill directly or via a shim (40) on a shoulder (33) of drill shank (30).

15. Countersunk hole drill according to claim 14, characterized in that the countersunk hole cutter (36) is screwed onto a threaded part (34) of drill shank (30), the axial position of the rotatably mounted stop member (38) and/or the cutter (36) being determined by at least one shim (40) engaging on the particular shoulder (33, 32).

**Revendications**

1. Procédé de fixation d'une dalle isolante à enduire à une surface de bâtiment, dans lequel, après la mise en place de la dalle isolante (4) contre la surface du bâtiment (6), on y perce, jusqu'à la surface du bâtiment, au moins un trou destiné à recevoir une cheville (2), et dans lequel une cheville (2) comportant une tête (14) en forme de rondelle est ensuite engagée dans le trou (18) foré de manière que sa tête (14) maintienne par pression la dalle isolante (4), caractérisé en ce que, lors du forage du trou (18) destiné à la cheville, on réalise par fraisage, au cours de la même opération, dans la dalle isolante (4), une partie rentrante (24) de même diamètre que la tête (14) de la cheville et d'une profondeur égale à l'épaisseur de la tête de cheville (14) dans le sens de sa longueur, y compris l'épaisseur de la rondelle (10) de matériau isolant, et en ce que cette partie rentrante est complètement remplie par une rondelle (10) de matériau isolant montée sur la tête de cheville (14).

2. Procédé selon la revendication 1, caractérisé en ce qu'après l'insertion, dans le trou (18, 24) de réception de la cheville, de la cheville (2) en même temps que de la rondelle (10) en matériau isolant, la surface extérieure (20), y compris la surface extérieure de la rondelle en matériau isolant, est égalisée par polissage et en ce qu'ensuite la surface (20) de la dalle isolante est recouverte par une couche de revêtement (22).

3. Procédé selon la revendication 1, caractérisé en ce qu'avant la mise en place de la cheville (2) dans le trou de réception (18, 24), la rondelle (10) en matériau isolant est fixée à la tête de cheville (14).

4. Cheville pour dalle isolante pour l'application du procédé selon la revendication 1, munie à l'une de ses extrémités d'une tête (14) en forme de rondelle destinée à comprimer la dalle isolante contre le bâtiment, caractérisée en ce que la face extérieure de la tête (14) en forme de rondelle porte, fixée sur elle, une rondelle (10, 10', 10'') en matériau isolant qui remplit la partie rentrante (24) réalisée par fraisage dans la dalle isolante et dont le matériau est identique ou analogue au matériau, susceptible d'être poli ou recouvert d'un revêtement, qui constitue la dalle isolante maintenue par pression par la cheville.

5. Cheville selon la revendication 4, caractérisée en ce que la liaison entre la tête de cheville (14) en forme de rondelle et la rondelle en matériau isolant est assurée par des parties saillantes (26', 27, 27') qui s'engagent dans des évidements (29) ménagées dans l'autre pièce.

6. Cheville selon l'une des revendications 4 ou 5, caractérisée en ce que la rondelle en matériau isolant est réalisée par formage de la tête de cheville (14).

7. Cheville selon l'une des revendications 4 à 6, caractérisée en ce que la face de la rondelle en matériau isolant la plus éloignée de la tête de cheville (14) comporte des parties rentrantes (28) réalisées par formage.

8. Cheville selon l'une des revendications 4 à 7, caractérisée en ce que la tête (14) en forme de rondelle se trouve sur un boulon de cheville (16) dont la partie de boulon (17) qui doit s'ancrer dans le trou de réception (18) ménagé dans le bâtiment est entouré par une cheville à écartement (12).

9. Cheville selon l'une des revendications 4 à 7, caractérisée en ce que, pour la fixation par derrière de la cheville à une plaque (48) de limitation de paroi, la cheville comporte deux parties de cheville (46a, 46b), vissées concentriquement l'une à l'autre, dont l'une comporte la tête de cheville (14") en forme de rondelle et dont l'autre comporte, dans la zone de la pointe de cheville, au moins une partie formant crochet (58, 59).

10. Cheville selon la revendication 9, caractérisée en ce que deux crochets (58, 59) dont réalisés par formage des deux côtés opposés d'une partie centrale (57) orientée dans le sens de la longueur de la cheville, de manière que leur axe longitudinal forme avec la direction longitudinale de la cheville un angle aigu (58') et que les crochets puissent s'engager en pivotant dans des évidements (55, 56) qui limitent des deux côtés la partie de cheville (57), les crochets (58, 59) s'appliquant, dans leur position d'écartement (fig. 10), contre des épaulements (62, 63) qui limitent les évidements (55, 56) dans le sens de la longueur de la cheville.

11. Cheville selon la revendication 10, caractérisée en la plus grande largeur des parties formant crochet est au ce que moins approximativement égale au diamètre de la cheville.

12. Cheville selon la revendication 9, caractérisée en ce que la partie de cheville (46b) qui comprend la pointe de cheville (53) comporte une partie creuse (51) formant tige dont la cavité comprend des moyens (70), réalisés par formage, qui permettent la mise en prise de la partie de maintien (68) d'un outil de montage (fig. 9).

13. Outil de montage pour le montage de la cheville selon la revendication 12 pour l'application du procédé selon la revendication 1, caractérisé en ce qu'il comprend une partié centrale (67) cylindrique fixe en forme de tige dont l'une des extrémités porte un boulon (68) situé à une certaine distance de l'outil (65) et réalisé par formage pour assurer la prise, sans possibilité de rotation relative, dans la tige creuse (51) de l'une des parties de cheville (46b) et dont la périphérie sert d'appui de palier à une douille (73) qui peut etre entraînée et qui, à son extrémité tournée vers le boulon (68), comporte un plateau de prise (75) muni de dispositifs pouvant s'engager dans la tête de cheville (14") en forme de rondelle de l'autre partie de cheville (46a).

14. Perceuse pour l'application du procédé selon la revendication 1, comprenant une tige de forage (30), pour la réalisation du trou de réception (18) de grande longueur, et une fraise (36), pour la réalisation de la partie rentrante, montée sans possibilité de rotation relative sur la tige de forage, caractérisée en ce quelle comporte une butée (38) montée sur palier de manière à pouvoir tourner autour de la tige de forage (30) et limitant la profondeur de perçage et de fraisage et prenant appui, directement ou par l'intermédiaire d'un disque intercalaire (40), sur un épaulement (33) de la tige de forage (30).

15. Perceuse selon la revendication 14, caractérisée en ce que la fraise (36) permettant la réalisation de la partie rentrante est vissée sur une partie filetée (34) de la tige de forage (30), la position axiale de la butée (38) montée sur paliers dè manière à pouvoir tourner et/ou de la fraise (36) de la perceuse étant déterminée par au moins un disque intercalaire (40) appliqué contre l'un des épaulements (33, 32) correspondants.

FIG.2

FIG.3

FIG.4

FIG.1

FIG.9

FIG.7

FIG.12

FIG.6

FIG.5

FIG.10

FIG.11

FIG.8